# DEMANDE DE BREVET EUROPEEN

(11) **EP 2 146 110 A1**
(43) Date de publication de la demande: **20.01.2010**
(21) Numéro de dépôt: 09165222.2
(22) Date de dépôt: 10.07.2009
(51) Int. Cl.: F16D 69/02, C04B 35/573

(54) **Procédé de fabrication d'une pièce de friction en materiau composite carbone/carbone**

(30) Priorité: 16.07.2008 FR 0854821
(71) Demandeur: Messier-Bugatti, 78140 Velizy Villacoublay (FR)
(72) Inventeur: Rollin, Magali, 60410 Verberie (FR); Pailler, René, 33610 Cestas (FR); Cataldi, Michel, 33140 Villenave d'Ornon (FR); Baud, Sandrine, 69006 Lyon (FR); Jacquemard, Pascale, 69780 Saint-Pierre-de-Chandieu (FR)
(74) Mandataire: Joly, Jean-Jacques

(57) **Abrégé**

Procédé de fabrication d'une pièce de friction en matériau composite carbone/carbone, comprenant :
- l'obtention d'une préforme fibreuse tridimensionnelle en fibres de carbone imprégnée par une solution ou suspension permettant de laisser une dispersion de particules d'oxyde métallique réfractaire sur les fibres de la préforme,
- la formation par carboréduction de carbure métallique par réaction de l'oxyde réfractaire avec le carbone des fibres par traitement thermique, et
- la poursuite du traitement thermique jusqu'à transformation du carbure en carbone par élimination du métal, et, ensuite
- la densification de la préforme par une matrice en carbone par infiltration chimique en phase gazeuse.

## Description

### Arrière-plan de l'invention

L'invention concerne la réalisation de pièces de friction en matériau composite carbone/carbone (C/C), c'est-à-dire comprenant un renfort fibreux en fibres de carbone et une matrice en carbone.

Un domaine d'application de l'invention est celui de la réalisation de disques de frein aéronautiques en matériau composite C/C.

Afin d'améliorer la résistance à l'usure de pièces de friction en matériau composite C/C, il a été proposé d'y introduire une céramique réfractaire, notamment du carbure de silicium SiC.

Ainsi, dans le document WO 99/23049, une préforme fibreuse en fibres de carbone est imprégnée par une solution colloïdale d'un oxyde réfractaire tel que de la silice SiO₂ lequel oxyde est transformé en carbure par traitement thermique provoquant une réaction entre l'oxyde et le carbone des fibres de la préforme. La préforme est ensuite densifiée par une matrice en carbone par infiltration chimique en phase gazeuse, ou CVI ("Chemical Vapor Infiltration").

Dans le document US 6 376 431, il est proposé d'imprégner la préforme fibreuse par une solution de précurseur de céramique, tel qu'un précurseur de SiC et de réaliser ensuite un traitement thermique de céramisation du précurseur avant densification par une matrice en carbone par CVI.

Quant au document WO 2006/067184 de la déposante, il décrit un procédé comprenant une imprégnation de textures ou strates fibreuses bidimensionnelles en fibres de carbone par une solution ou suspension permettant, après réalisation d'une préforme fibreuse tridimensionnelle à partir des textures ou strates bidimensionnelles, d'obtenir une préforme fibreuse imprégnée. La solution ou suspension est un sol-gel précurseur d'oxyde réfractaire, tel que SiO₂, ou une suspension colloïdale d'oxyde, telle que de la silice colloïdale. Un traitement thermique de conversion de l'oxyde en carbure par réaction avec le carbone des fibres est réalisé avant densification par une matrice en carbone par CVI.

La déposante a constaté que la présence de particules de céramique permet certes de réduire l'usure par friction, mais affecte les propriétés mécaniques de la pièce de friction en matériau composite C/C obtenue. Le procédé du document WO 2006/067184 vise à atténuer cet effet de la présence de particules céramique en permettant de contrôler la distribution de particules de céramique au sein de la pièce, notamment pour éviter leur présence dans des zones fortement sollicitées mécaniquement, telles que les âmes de disques de frein qui assurent la transmission du couple de freinage.

### Objet et résumé de l'invention

L'invention a pour but de proposer un procédé permettant l'obtention de pièces de friction en matériau composite C/C présentant une usure réduite en friction, notamment à des températures élevées, tout en présentant de bonnes propriétés mécaniques dans tout le volume de la pièce.

Ce but est atteint par un procédé de fabrication d'une pièce de friction en matériau composite carbone/carbone, comprenant :
- l'obtention d'une préforme fibreuse tridimensionnelle en fibres de carbone imprégnée par une solution ou suspension permettant de laisser une dispersion de particules d'oxyde métallique réfractaire sur les fibres de la préforme,
- la formation par carboréduction de carbure métallique par réaction de l'oxyde réfractaire avec le carbone des fibres par traitement thermique,
- la poursuite du traitement thermique jusqu'à transformation du carbure en carbone par élimination du métal, et, ensuite
- la densification de la préforme par une matrice en carbone par infiltration chimique en phase gazeuse.

Comme cela sera décrit en détail plus loin, la déposante a constaté que, de façon surprenante, le procédé selon l'invention permet d'obtenir une excellente résistance à l'usure, en dépit de la transformation du carbure en carbone, tout en présentant des propriétés mécaniques similaires à celles des pièces de friction en matériau composite C/C obtenues de façon conventionnelle par densification de préformes fibreuses en carbone sans imprégnation préalable par une solution ou suspension permettant de distribuer des particules de céramique dans la préforme.

Le traitement thermique est de préférence réalisé sous atmosphère inerte ou essentiellement inerte, c'est-à-dire une atmosphère formée de gaz neutre et d'une faible quantité d'oxygène, typiquement avec un taux d'oxygène de quelques ppm à quelques centaines de ppm environ, par exemple entre 2 ppm et 250 ppm.

Le traitement thermique est de préférence réalisé à une température comprise entre 1450°C et 2300°C. La durée totale du traitement thermique est de préférence au moins égale à 2 h et de préférence au plus égale à 40 h.

Le traitement thermique peut en outre être réalisé sous pression réduite, par exemple sous vide primaire.

L'imprégnation peut être réalisée par une suspension colloïdale de particules d'oxyde ou par un sol-gel contenant au moins un précurseur d'oxyde.

De préférence, la masse d'oxyde introduite dans la préforme fibreuse par imprégnation représente entre 0,01 % et 10 % de la masse de la préforme fibreuse avant imprégnation, de préférence encore entre 0,1% et 5%.

Selon un mode de réalisation, on réalise successivement une étape de réalisation de la préforme fibreuse et une étape d'imprégnation de la préforme fibreuse par la solution ou suspension.

Selon un autre mode de réalisation, on réalise successivement une étape d'imprégnation de textures fibreuses bidimensionnelles par la solution ou suspension et une étape de réalisation de la préforme fibreuse imprégnée à partir des textures fibreuses imprégnées.

Selon encore un autre mode de réalisation on réalise successivement une étape d'imprégnation de fils par la solution ou suspension, une étape de réalisation de texture fibreuse bidimensionnelle imprégnée à partir des fils imprégnés et une étape de réalisation de la préforme fibreuse imprégnée à partir de texture fibreuse imprégnée.

De préférence, l'oxyde réfractaire est SiO₂.

### Brève description des dessins

Dans la description détaillée donnée ci-après, il sera fait référence aux dessins annexés sur lesquels :
- les figures 1 et 2 montrent des étapes successives de deux modes de réalisation d'un procédé conforme à l'invention ;
- la figure 3 montre des courbes représentant l'usure mesurée de disques de frein en matériau composite C/C en fonction de la température, pour des disques de frein obtenus selon l'invention et des disques de frein de l'art antérieur ; et
- la figure 4 illustre très schématiquement une éprouvette en matériau composite C/C pour essai de résistance au cisaillement translaminaire.

### Description détaillée de modes de réalisation

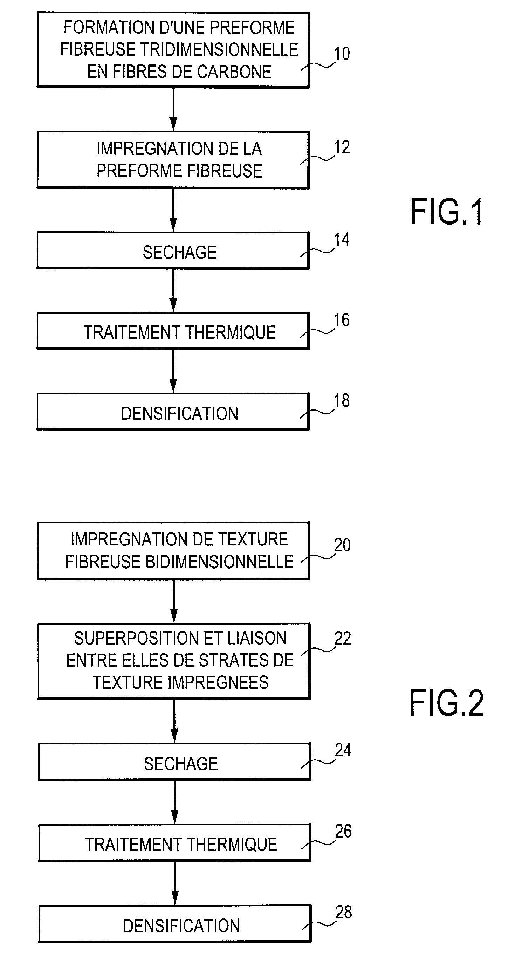

Un premier mode de réalisation d'un procédé conforme à l'invention sera décrit en référence à la figure 1.

Une première étape 10 consiste à réaliser une préforme fibreuse tridimensionnelle (3D) en fibres de carbone.

De façon bien connue en soi, une telle préforme 3D peut être réalisée à partir de strates ou couches d'une texture fibreuse bidimensionnelle (2D) qui sont superposées et liées entre elles. La texture fibreuse 2D peut être sous forme de tissu, feutre, tricot ou de nappe unidirectionnelle (UD) ou multidirectionnelle (nD). Une nappe UD est formée de fils ou filaments s'étendant sensiblement parallèlement les uns aux autres, une cohésion transversale pouvant être apportée, par exemple par aiguilletage léger, pour donner une certaine cohésion à la nappe UD. Une nappe nD est formée de nappes UD superposées dans des directions différentes et liées entre elles par exemple par aiguilletage, couture ou similaire. Des textures fibreuses 2D complexes peuvent aussi être utilisées comprenant un tissu ou une nappe et un voile de fibres libres déposées sur le tissu ou la nappe et lié par exemple par aiguilletage. La liaison des couches ou strates superposées en texture fibreuse 2D peut être réalisée par exemple par aiguilletage ou par implantation de fils, pour obtenir une préforme fibreuse 3D cohérente, c'est-à-dire susceptible d'être manipulée sans perdre sa cohésion. On pourra se référer aux documents US 4 790 052 et US 5 792 715 qui décrivent la fabrication de plaques fibreuses 3D dans lesquelles des préformes peuvent être découpées telles que des préformes annulaires pour disques de frein, ou au document EP 0 232 059 qui décrit la réalisation d'une préforme annulaire par superposition et aiguilletage circulaire de strates annulaires.

La texture fibreuse 2D peut aussi être sous forme d'une texture hélicoïdale qui est enroulée en spires à plat superposées pour former une préforme annulaire telle qu'une préforme de disque de frein. Les spires superposées peuvent être liées entre elles par aiguilletage. On pourra se référer aux documents US 6 009 605 et US 6 363 593.

La texture fibreuse 2D peut être en carbone ou, plus usuellement en précurseur de carbone par exemple en polyacrylonitrile (PAN) préoxydé. Dans ce dernier cas, la transformation du précurseur en carbone est réalisée par traitement thermique après réalisation de la préforme fibreuse 3D.

Une deuxième étape 12 du procédé consiste à imprégner la préforme fibreuse par une suspension ou solution permettant de laisser au moins un oxyde réfractaire distribué sur les fibres de la préforme. On peut utiliser une solution sol-gel contenant un précurseur d'oxyde. Par exemple, un sol-gel contenant un précurseur de SiO₂ peut être obtenu en mélangeant du tétraéthoxysilane ou TEOS, Si(OC₂H₅)₄, précurseur de SiO₂ avec de l'éthanol, de l'acide chlorhydrique et de l'eau, des particules de SiO₂ étant obtenues après séchage. On peut aussi utiliser une suspension colloïdale d'oxyde, les particules d'oxyde ayant une dimension moyenne de préférence inférieure à 100 nm ou même inférieure à 50 nm.

De préférence on utilise une solution contenant un précurseur de SiO₂ ou une suspension colloïdale de SiO₂

L'imprégnation de la préforme fibreuse peut être réalisée par immersion dans un bain et être assistée par mise sous vide.

Après séchage (étape 14) des particules d'oxyde réfractaire sont réparties sur les fibres de la préforme fibreuse, dans tout le volume de celle-ci. L'imprégnation est réalisée en un ou plusieurs cycles et en sélectionnant les concentrations de la solution sol-gel ou de la suspension de sorte que la quantité d'oxyde réfractaire distribuée dans la préforme fibreuse représente, en masse, entre 0,1 % et 20 %, de préférence entre 1 % et 15 % de la masse de préforme fibreuse avant imprégnation.

Un traitement thermique est ensuite effectué (étape 16) pour convertir l'oxyde réfractaire en carbure par carboréduction par réaction avec le carbone des fibres de la préforme, puis pour transformer le carbure en carbone par élimination du silicium. Le traitement thermique est réalisé à une température de préférence comprise entre 1 450°C et 2300°C. La durée totale du traitement thermique est de préférence au moins égale à 2 h et de préférence au plus égale à 40 h, étant noté que cette durée pour aboutir à la transformation complète du carbure en carbone peut dépendre notamment de la température. Plus la température choisie est élevée plus la durée peut être courte. Ainsi, pour une température de traitement thermique dans la plage de 1450°C à 1750°C, la durée du palier à cette température peut être comprise entre 4h et 40 h tandis que pour une température de traitement thermique dans la plage de 1750°C à 2300°C, la durée du palier à cette température peut être comprise entre 2h et 30h. On pourra par exemple choisir une température d'environ 1600 °C et une durée qui est alors de préférence au minimum de 8 h et au maximum de 36 h.

Le traitement thermique est réalisé sous atmosphère inerte, par exemple sous gaz neutre tel qu'azote ou argon, ou sous atmosphère essentiellement inerte, c'est-à-dire pouvant contenir aussi une faible quantité d'oxygène au-delà d'un taux résiduel inévitable. En particulier dans la partie inférieure de la plage de température indiquée, par exemple entre 1450°C et 1600°C, la présence d'oxygène à un taux de quelques ppm, par exemple entre quelques ppm et quelques centaines de ppm favorise la transformation du carbure en carbone.

En outre, également pour accroître la cinétique de transformation du carbure en carbone, il peut être avantageux de réaliser le traitement thermique à pression réduite, sous vide primaire dynamique, en particulier dans la partie supérieure de la plage de température indiquée.

Le traitement thermique peut être réalisé en deux étapes, une première étape de formation du carbure et une deuxième étape de transformation du carbure en carbone, les deux étapes étant éventuellement réalisées sous des conditions différentes (température, pression, atmosphère). Ainsi la première étape peut être réalisée à une première température sous gaz neutre à pression atmosphérique et la deuxième étape peut être réalisée sous gaz neutre à pression réduite et température plus élevée.

On notera, en variante, que l'imprégnation pourra être réalisée sur une préforme en fibres de précurseur de carbone, la transformation du précurseur en carbone puis celle de l'oxyde en carbure pouvant être enchaînées au cours d'un même traitement thermique.

Selon une autre variante, un précurseur de carbone peut être ajouté à la solution ou à la suspension utilisée pour l'imprégnation de la préforme fibreuse. Lors du traitement thermique, le carbone résultant de la transformation du précurseur réagit avec l'oxyde réfractaire pour former le carbure, de sorte que la consommation du carbone des fibres de la préforme peut au moins en grande partie être évitée. La déposante a noté aussi que les particules de carbure formé sont alors distribuées de façon plus uniforme sur les fibres. Le précurseur peut être un polyoside, par exemple du saccharose. La quantité de précurseur de carbone est choisie pour apporter sans excès notable le carbone nécessaire à la formation du carbure par réaction avec l'oxyde.

Après traitement thermique, une étape 18 de densification par une matrice en carbone obtenue par CVI est réalisée permettant l'obtention d'une pièce en matériau composite C/C, éventuellement avec usinage final. La formation d'une matrice carbone par CVI est un processus bien connu en soi. La préforme est placée dans un four dans lequel une phase gazeuse précurseur de carbone est introduite qui diffuse au sein de la préforme et qui, par décomposition, donne du carbone pyrolytique qui se dépose au sein de la préforme dans des conditions de température et de pression déterminées.

La figure 2 montre un autre mode de réalisation qui se distingue de celui décrit ci-avant en ce que l'imprégnation est réalisée sur la texture fibreuse 2D avant formation de la préforme fibreuse 3D.

Ainsi, une première étape 20 consiste à imprégner une texture fibreuse 2D par immersion ou passage dans un bain contenant une solution ou suspension telle que décrite plus haut ou par projection de la solution ou suspension.

Une préforme fibreuse 3D est réalisée (étape 22) par superposition et liaison entre elles de strates de texture fibreuse 2D préalablement imprégnées, la liaison pouvant être réalisée par exemple par aiguilletage ou implantation de fils.

Des étapes de séchage (24), traitement thermique (26) et densification (28) sont ensuite réalisées comme dans le mode de réalisation de la figure 1.

L'imprégnation peut être réalisée sur une texture fibreuse 2D en fibres de précurseur de carbone, la transformation du précurseur en carbone étant réalisée lors du traitement thermique.

Il est possible aussi d'insérer des strates de texture fibreuse 2D non imprégnées lors de la réalisation de la préforme fibreuse 3D, comme décrit dans le document précité WO 2006/067184.

On notera qu'une imprégnation des fils avant même formation de la structure fibreuse 2D avec ces fils peut être envisagée.

Des essais effectués, comme décrit ci-après, ont montré que le procédé selon l'invention permet d'obtenir des pièces de friction en matériau composite C/C présentant une très bonne résistance à l'usure, notamment aux températures élevées, tout en présentant des propriétés mécaniques sensiblement équivalentes à celles de pièces de friction obtenues de façon classique par densification par CVI de préformes fibreuses en carbone non préalablement imprégnées.

### Exemple 1

On a réalisé des préformes fibreuses en fibres de carbone pour disques de frein en matériau composite C/C par un procédé comprenant :
- la réalisation de textures fibreuses sous forme de nappes nD en fibres de précurseur de carbone (PAN préoxydé) par superposition dans trois directions différentes de nappes UD et liaison de celles-ci par aiguilletage léger,
- la réalisation d'une plaque fibreuse 3D par superposition de strates de nappes nD, et liaison des strates par aiguilletage au fur et à mesure de leur superposition,
- la découpe dans la plaque fibreuse 3D de préformes annulaires en fibres de précurseur de carbone, et
- un traitement thermique de transformation (carbonisation) du précurseur en carbone pour obtenir des préformes annulaires en fibres de carbone.

Des préformes ainsi réalisées ont été imprégnées par une suspension de silice colloïdale avec une concentration de 2 % en masse. L'imprégnation a été réalisée par immersion dans un bain et mise sous vide de manière, après séchage, à laisser subsister des particules de SiO₂ réparties dans les préformes fibreuses et représentant environ 3,8 % en masse par rapport à la masse des préformes fibreuses avant imprégnation.

Les préformes séchées ont été soumises à un traitement thermique sous flux d'azote non enrichi en oxygène à un débit de 4l/min et vide dynamique à une pression de 90 mbars, en élevant la température jusqu'à 1 600°C et en conservant cette température pendant 36 h, de manière à convertir SiO₂ en SiC par réaction avec le carbone de fibres des préformes et à transformer SiC en carbone.

Une densification par une matrice en carbone obtenue par CVI a ensuite été réalisée et les préformes annulaires densifiées ont été usinées pour obtenir des disques de dimensions voulues en matériau composite C/C représentatifs, à échelle réduite, de disques de frein aéronautiques.

### Exemple 2 (comparatif)

Des préformes en fibres de carbone obtenues comme dans l'exemple 1, mais non imprégnées ont été densifiées par une matrice carbone par CVI, comme dans l'exemple 1 pour obtenir des disques de mêmes dimensions que dans l'exemple 1.

### Exemple 3 (comparatif)

On a procédé comme dans l'exemple 1, mais en réalisant le traitement thermique sous atmosphère d'azote à 1600°C pendant 4h seulement cette durée étant suffisante pour permettre la formation de carbure mais insuffisante pour transformer totalement celui-ci en carbone.

### Essais

On a soumis à des essais de freinage des disques :
D₁₁, D₁₂ obtenus selon l'exemple 1,
D₂₁, D₂₂ obtenus selon l'exemple 2, et
D₃₁, D₃₂ obtenus selon l'exemple 3.

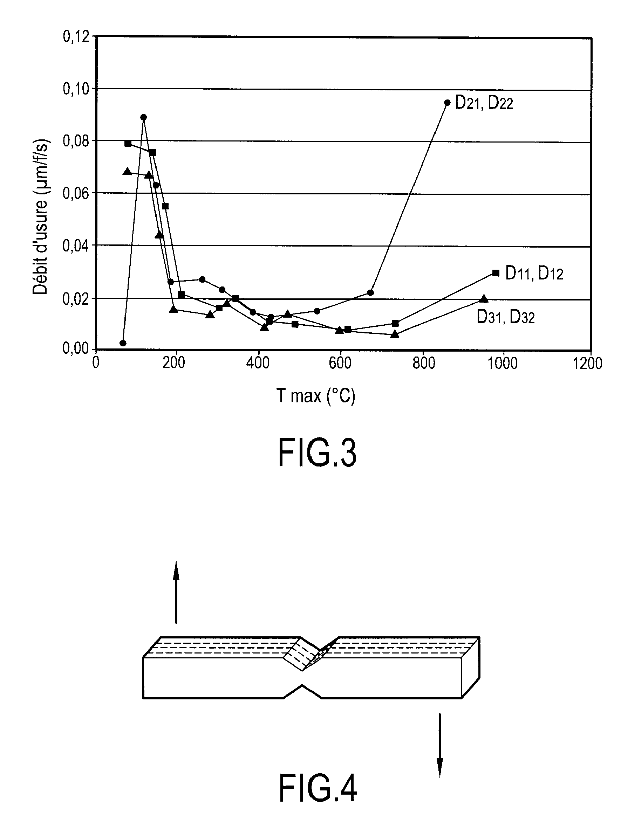

La figure 3 montre la variation de l'usure constatée en fonction de la température atteinte par les disques (mesurée 1mm au dessous de la surface frottante), l'usure étant mesurée en microns/face frottante/seconde (µm/f/s).

On constate la très bonne résistance à l'usure des disques D₁₁, D₁₂ obtenus conformément à l'invention aux températures élevées comparativement à celle des disques D₂₁, D₂₂ obtenus sans introduction de particules de SiO₂.

Des essais mécaniques ont été réalisés sur des éprouvettes E1, E3 du même matériau composite que celui des disques obtenus selon les exemples 1 et 3.

Le tableau 1 ci-après indique des valeurs mesurées de résistance en compression et de module en compression en direction z (perpendiculairement aux faces d'un disque), de résistance au cisaillement translaminaire (parallèlement aux strates de la préforme fibreuse du disque) et de tenue au choc.

Les essais ont été effectués conformément aux normes européennes EN658-2 (Céramiques techniques avancées - Propriétés mécaniques des céramiques composites à température ambiante - Partie 2 : détermination des propriétés en compression) et EN10045-1 (Matériaux métalliques - Essais de flexion par choc sur éprouvette Charpy-Partie 1 : méthode d'essai).

Pour la mesure de la résistance au cisaillement translaminaire on a utilisé une éprouvette telle que celle de la figure 4 sur laquelle les flèches symbolisent l'effort de cisaillement appliqué et les tirets symbolisent les strates de texture fibreuse.

**Tableau 1**

| | E₁ | E₃ |
|---|---|---|
| Résistance en compression z (MPa) | 125 | 71 |
| Module en compression z (GPa) | 4,1 | 2,5 |
| Résistance au cisaillement translaminaire (MPa) | 51,7 | 29,5 |
| Résistance au choc (kJ/m²) | 11,1 | 4 |

Le disque obtenu par le procédé selon l'invention présente des caractéristiques mécaniques supérieures à celles des disques de l'exemple 3 et comparables à celles des disques de l'état de la technique traditionnel.

On obtient donc de façon remarquable un avantage, en terme de résistance à l'usure, similaire à celui apporté par la présence de particules de carbure, mais sans effet négatif sur les caractéristiques mécaniques.

## Revendications

1. Procédé de fabrication d'une pièce de friction en matériau composite carbone/carbone, comprenant :
- l'obtention d'une préforme fibreuse tridimensionnelle en fibres de carbone imprégnée par une solution ou suspension permettant de laisser une dispersion de particules d'oxyde métallique réfractaire sur les fibres de la préforme,
- la formation par carboréduction de carbure métallique par réaction de l'oxyde réfractaire avec le carbone des fibres par traitement thermique,
- la poursuite du traitement thermique jusqu'à transformation du carbure en carbone par élimination du métal, et, ensuite
- la densification de la préforme par une matrice en carbone par infiltration chimique en phase gazeuse.

2. Procédé selon la revendication 1, **caractérisé en ce que** le traitement thermique est réalisé sous atmosphère inerte.

3. Procédé selon la revendication 1, **caractérisé en ce que** le traitement thermique est réalisé sous une atmosphère formée de gaz neutre et d'oxygène à un taux compris entre 2 ppm et 250 ppm.

4. Procédé selon l'une quelconque des revendications 1 à 3, **caractérisé en ce que** le traitement thermique est réalisé à une température comprise entre 1450°C et 2300°C.

5. Procédé selon l'une quelconque des revendications 1 à 4, **caractérisé en ce que** le traitement thermique est réalisé pendant une durée totale au moins égale à 2 h.

6. Procédé selon l'une quelconque des revendications 1 à 5, **caractérisé en ce que** le traitement thermique est réalisé sous pression réduite.

7. Procédé selon l'une quelconque des revendications 1 à 6, **caractérisé en ce que** la préforme est imprégnée par une suspension colloïdale de particules d'oxyde.

8. Procédé selon l'une quelconque des revendications 1 à 6, **caractérisé en ce que** la préforme est imprégnée par un sol-gel contenant au moins un précurseur d'oxyde.

9. Procédé selon l'une quelconque des revendications 1 à 8, **caractérisé en ce que** la masse d'oxyde introduite dans la préforme fibreuse par imprégnation représente entre 0,01 % et 10 % de la masse de la préforme fibreuse avant imprégnation.

10. Procédé selon l'une quelconque des revendications 1 à 9, **caractérisé en ce que** l'on réalise successivement une étape de réalisation de la préforme fibreuse et une étape d'imprégnation de la préforme fibreuse par la solution ou suspension.

11. Procédé selon l'une quelconque des revendications 1 à 9, **caractérisé en ce que** l'on réalise successivement une étape d'imprégnation de texture fibreuse bidimensionnelle par la solution ou suspension et une étape de réalisation de la préforme fibreuse imprégnée à partir de texture fibreuse imprégnée.

12. Procédé selon l'une quelconque des revendications 1 à 9, **caractérisé en ce que** l'on réalise successivement une étape d'imprégnation de fils par la solution ou suspension, une étape de réalisation de texture fibreuse bidimensionnelle imprégnée à partir des fils imprégnés et une étape de réalisation de la préforme fibreuse imprégnée à partir de texture fibreuse imprégnée.

13. Procédé selon l'une quelconque des revendications 1 à 12, **caractérisé en ce qu'**un précurseur de carbone est ajouté à la solution ou suspension.

14. Procédé selon la revendication 13, **caractérisé en ce que** le précurseur de carbone est un polyoside.

15. Procédé selon l'une quelconque des revendications 1 à 14, **caractérisé en ce que** l'oxyde réfractaire est SiO₂.
